# EUROPÄISCHE PATENTSCHRIFT

(11) **EP 3 977 572 B1**
(45) Veröffentlichungstag und Bekanntmachung des Hinweises auf die Patenterteilung: **11.02.2026**
(21) Anmeldenummer: 20718258.5
(22) Anmeldetag: 03.04.2020
(51) Int. Cl.: H01R 39/38, H02K 9/28

(54) **SCHLEIFRINGSYSTEM MIT VERBESSERTER KÜHLUNG**
SLIP RING SYSTEM WITH IMPROVED COOLING
SYSTÈME DE BAGUE DE FROTTEMENT À REFROIDISSEMENT AMÉLIORÉ

(30) Priorität: 28.05.2019 EP 19177085
(43) Veröffentlichungstag der Anmeldung: 06.04.2022
(73) Patentinhaber: Flender GmbH, 46395 Bocholt (DE)
(72) Erfinder: BINDER, Herbert, 94127 Neuburg (DE); FRIEDL, Daniel, 94081 Fürstenzell (DE); GRUBER, Robert, 94099 Ruhstorf (DE); MEMMINGER, Oliver, 94127 Neuburg a. Inn (DE); RASKOPF, Andrej, 94036 Passau (DE); SCHIFFERER, Klaus, 94152 Neuhaus am Inn (DE)
(74) Vertreter: Michalski Hüttermann & Partner Patentanwälte mbB
(86) Internationale Anmeldenummer: PCT/EP2020/059546
(87) Internationale Veröffentlichungsnummer: WO 2020/239301

(56) Entgegenhaltungen:
- EP-A1- 3 291 423
- JP-A- S5 028 606
- US-A- 4 137 474
- US-A1- 2018 166 844

## Beschreibung

Die Erfindung betrifft ein Schleifringsystem nach dem Oberbegriff des Anspruchs 1 und eine dynamoelektrische Maschine.

Schleifringsysteme dienen dazu in den rotierenden Teil einer dynamoelektrischen Maschine, also den Läufer, eine elektrische Erregung einzubringen. Durch immer höhere Leistungen der dynamoelektrischen Maschine, beispielsweise Generatoren von Windkraftanlagen werden die dafür erforderlichen übertragbaren elektrischen Leistungen immer höher. Dies führt zu einer zusätzlichen Erwärmung der Schleifringsysteme, deren Entwärmung aufgrund einer zusätzlichen Kosten- und Bauraumoptimierung dieser Schleifringsysteme und deren Komponenten immer schwieriger wird. Durch die nunmehr bei kompakterer Ausführung anzustrebenden höheren Strombelastungen des Schleifringsystems steigen die Temperaturen, insbesondere der Bürsten und der Bürstenhalter erheblich an. Durch übermäßige Temperaturerhöhung entstehen Schäden an dem Schleifringsystem und auch an den Bürsten.

Um den steigenden Temperaturen entgegenzutreten, werden ab einer bestimmten Baugröße der dynamoelektrischen Maschine Schleifringkörper mit größeren Außendurchmessern eingesetzt. Dazu werden auch die verwendeten Bürstenhalterungen, die auch als Bürstenbrücken bezeichnet werden, dementsprechend größer dimensioniert. Jedoch nimmt dadurch der Arbeitsbereich des Schleifringsystems wesentlich mehr Raum ein. Durch Vergrößern des Schleifringsystems, wie Schleifringgehäuse und deren Komponenten werden höhere Materialkosten verursacht. Des Weiteren führt diese leistungsbedingte Vergrößerung auch zu einer ungewollten Vergrößerung der Außenabmessung der dynamoelektrischen Maschine.

JP S50 28606 A beschreibt ein Schleifringsystem mit den Merkmalen des Oberbegriffs des Anspruch 1.

Ausgehend davon liegt der Erfindung die Aufgabe zugrunde, ein Schleifringsystem zu schaffen, das auch bei einer vergleichsweise kompakten Ausführung des Schleifringsystems die maximal zulässigen Temperaturen des Schleifringsystems und deren Komponenten nicht überschreitet.

Die Lösung der gestellten Aufgabe gelingt durch ein Schleifringsystem nach Anspruch 1 sowie durch eine elektrisch erregte dynamoelektrische Maschine nach Anspruch 6. Durch die erfindungsgemäße Bürstenhalterung kann nunmehr jede Bürste in der Bürstenhalterung vergleichsweise gut gekühlt werden, sodass die übertragbare Leistung in einen Läufer einer dynamoelektrischen Maschine gesteigert werden kann.

Dies trägt zu einer Vergleichmäßigung des Leistungsflusses bzw. des Stromes über die Bürsten einer elektrischen Phase eines Schleifringsystems bei.

Durch die verbesserte Kühlleistung von Bürsten und/oder Bürstenhalterung wird auch das Schleifringsystem thermisch nahezu gleichmäßig belastet und ausreichend gekühlt, so dass eine kompakte Bauweise des Schleifringsystems vorliegt.

Das Belüftungssystem führt Luft innerhalb des Schleifringsystems, das geschlossen oder offen ausgeführt ist, derart, dass Bürstenhalterungen, und/oder Bürstentaschen und/oder Bürsten kühlbar sind. Die gelingt, indem der erforderliche Kühlluftstrom, erzeugt durch Radial- und/oder Axiallüfter, innerhalb oder an dem Schleifringsystem vorgesehen sind.

Die Lösung der gestellten Aufgabe gelingt auch durch eine dynamoelektrische Maschine, insbesondere Generator einer Windkraftanlage, mit einem erfindungsgemäßen Schleifringsystem. Durch Vergrößern der Oberfläche der Bürstentaschen mittels Rippen oder Noppen an der Oberfläche der Bürstentaschen, als auch gegebenenfalls Ausnehmungen an den Bürstentaschen, wird die Kühloberfläche der Bürstentaschen und/oder der überströmten Fläche der Bürsten durch einen Kühlluftstrom vergrößert. Die Rippen können dabei als Rechteckrippen, Dreieckrippen, Trapezrippen, konkave oder konvexe parabolische Rippen ausgeführt sein.

Durch zumindest einen innerhalb des Schleifringsystems angeordneten Lüfter wird Luft an der Bürstentasche und den Bürstenhalterungen vorbeigeführt, die oberflächenvergrößernde Strukturen aufweisen.

In einer nicht beanspruchten Ausführungsform können dabei dementsprechende Lüfter eingesetzt werden, die einen Radialluftstrom und/oder einen in Umfangsrichtung verlaufenden Kühlluftstrom generieren. Dies kann unterstützt werden, in dem die Noppen, Nadeln oder Rippen dementsprechend in Strömungsrichtung eines generierten Kühlluftstroms angeordnet werden.

Durch die Reduzierung der Betriebstemperaturen im Schleifringsystem werden dadurch niedrigere Temperaturen geschaffen, die somit auch vergleichsweise geringere Bauabmessungen eines Schleifringsystems und deren angrenzenden Komponenten gestatten. Des Weiteren kann die übertragene Leistung von den Bürsten auf den jeweiligen Schleifring auch mit vergleichsweise weniger Bürsten pro elektrische Phase betrieben werden, ohne dass dabei die Bürsten Kühlungsprobleme aufweisen.

Es sind somit höhere Leistungsstufen der gesamten Schleifringsysteme und damit der dynamoelektrischen Maschine möglich.

Eine Belüftung des Schleifringsystems ist somit durch eine Durchzugsbelüftung, als auch oder ergänzend durch eine Fremdbelüftung möglich. Der Kühlluftstrom oder die Kühlluftströme werden durch Lüfter in und/oder an dem Schleifringsystem generiert.

Die Außenluft, die als kühlere Luft über die Kühlöffnungen in das Schleifringsystem gesaugt wird, wird innerhalb des Schleifringsystems über Kühlluftführungen bzw. Leitvorrichtungen unter anderem direkt an die Bürstentasche und/oder die Bürstenhalterung sowie ggf. die Bürsten geführt. Da dies die kritischen Wärmequellen sind, werden diese nun direkt mit dem sogenannten Kaltluftstrom direkt gekühlt.

Damit können in dem Schleifringsystem vorhandene Lüfter, wie z.B. Radiallüfter unterstützt werden.

Bei einem durchzugsbelüfteten Schleifringsystem wird kühlere Umgebungsluft angesaugt und im Schleifringsystem durch Lüfter und/oder Leitvorrichtungen, insbesondere an die Wärmequellen verteilt. Die nun im Schleifringsystem an den Bürstentaschen, den Bürstenhalterungen und/oder den Bürsten erwärmte Luft wird aus dem Schleifringraum in die Umgebung abgeführt. Die Luftströmung wird dabei von Saug- und/oder Drucklüftern generiert.

Filtermatten am Zugang und/oder am Abgang können dabei die verschmutzte Luft filtern.

Bei einem geschlossenen Schleifringsystem wird der in einem Zwischenkühler rückgekühlte Innenkühlkreislauf durch Lüfter und/oder Leitvorrichtungen, insbesondere an die Wärmequellen innerhalb des geschlossenen Gehäuses des Schleifringsystems verteilt. Die nun im Schleifringsystem an den Bürstentaschen, den Bürstenhalterungen und/oder den Bürsten erwärmte Luft wird aus dem Schleifringraum in den Zwischenkühler geleitet. Diese Luftströmung wird dabei von Saug- und/oder Drucklüftern generiert, die innerhalb des Gehäuses des Schleifringsystems angeordnet sind.

Die Erfindung sowie weitere vorteilhafte Ausgestaltungen der Erfindung werden anhand prinzipiell dargestellter Ausführungsbeispiele näher erläutert. Darin zeigen:
- FIG 1: eine Bürstenhalterung,
- FIG 2 bis FIG 5: jeweils ein Trägersegment mit Bürstenhaltung,
- FIG 6 bis FIG 8: jeweils einen Schleifring,
- FIG 9: eine Bürstenbrücke und
- FIG 10: eine prinzipiell dargestellte dynamoelektrische Maschine mit Schleifringsystem.

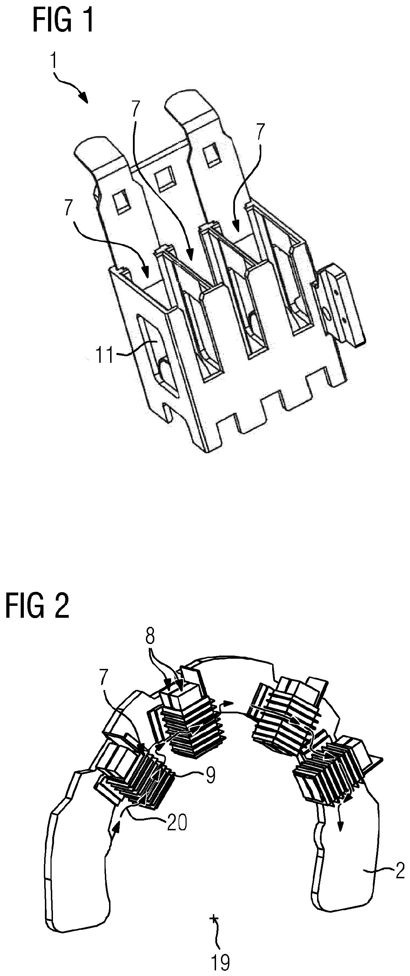

FIG 1 zeigt eine nicht beanspruchte Bürstenhalterung 1 mit Bürstentaschen 7 in diesem Fall drei parallelen Aufnahmetaschen, in die Bürsten 8 einsetzbar sind. Hier sind die Bürstentaschen 7 nur mit Ausnehmungen 11 versehen, um insbesondere eine Kühlung der Bürsten 8 zu erleichtern.

FIG 2 zeigt ein nicht beanspruchtes Trägersegment 2 an dem mehrere Bürstenhalterungen 1 angeordnet sind, wobei ein Trägersegment 2 für je eine elektrische Phase U, V, M eines Schleifringsystems 13 vorgesehen ist. Die Bürstentaschen 7 zeigen Rippen 9, die im Wesentlichen tangential zu einer Achse 19 verlaufen.

Es sind grundsätzlich auch Ausführungen der Bürstentaschen 7 oder Bürstenhalterungen 1 möglich, bei denen Ausnehmungen 11 und oberflächenvergrößernde Strukturen, wie Rippen 9 realisiert sind.

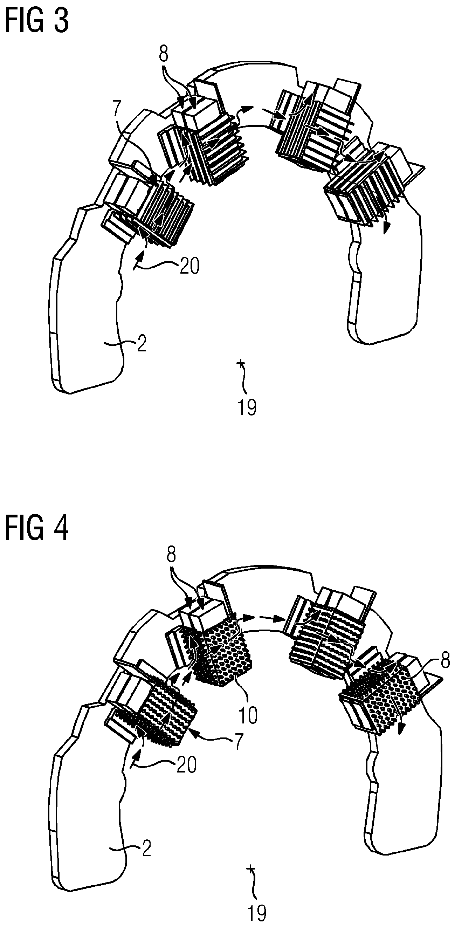

FIG 3 zeigt eine Mischung von Verlaufsformen der Rippen 9, indem zum einen eine tangentiale Verlaufsform, als auch eine radiale Verlaufsform an einer Bürstenhalterung 1 vorhanden ist. Damit wird ein Kühlluftstrom nicht nur in Tangentialrichtung sondern auch in Radialrichtung geführt, was die Kühlung dieser Bürstenhalterung 1 weiter verbessert.

FIG 4 zeigt ein weiteres Trägersegment 2 mit Bürstentaschen 7, deren Oberfläche mit Nadeln 10 bzw. Noppen versehen ist, um die Oberfläche zu vergrößern und damit die Kühlung zu verbessern. Auch hier kann ein Kühlluftstrom 20 sowohl in Tangential- als auch Radialrichtung geführt werden.

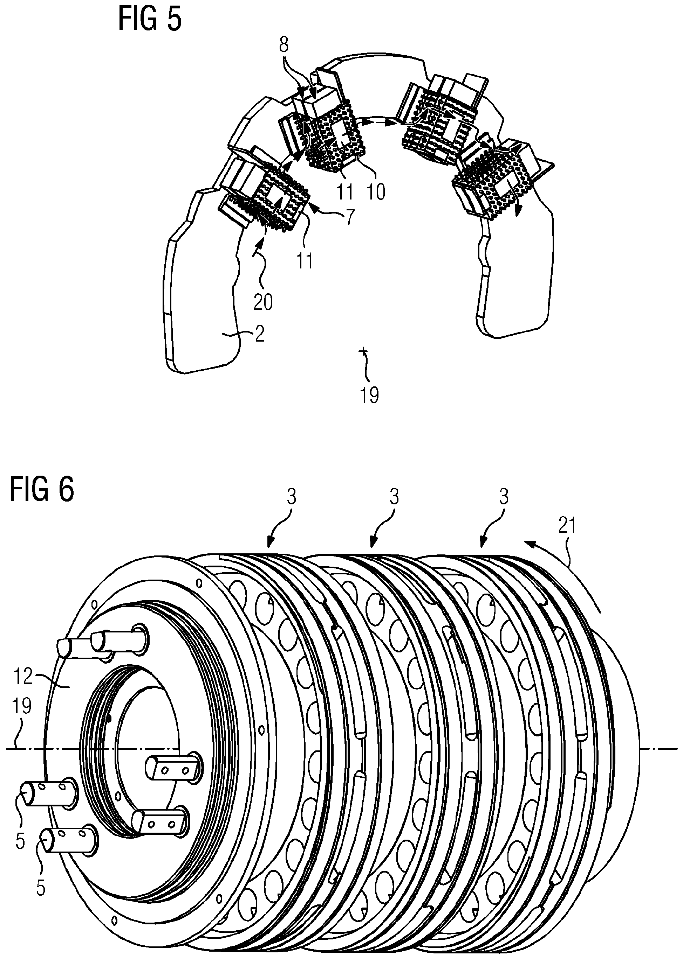

FIG 5 zeigt eine Bürstentasche 7, deren Haltefunktion minimiert wurde, indem an die Bürstentasche 7 zusätzlich eine vorgegebene Anzahl von Ausnehmungen 11 vorgesehen wurden. An den verbliebenen Führungen der Bürste 8 sind Nadeln 10 angebracht, so dass eine direkte Kühlung Bürsten 8 und eine Kühlung der Bürstentasche 7 ermöglicht wird.

FIG 6 zeigt eine Schleifringeinheit mit drei einzelnen Schleifringen 3, die axial hintereinander angeordnet sind und durch eine Isolierung 4 voneinander getrennt sind. Jeder Schleifring 3 ist für eine elektrische Phase U oder V oder W vorgehen. An einem axialen Ende dieser Anordnung befindet sich ein Stützring 12 aus dem Kontaktstellen 5 achsparallel ragen und die einen elektrischen Anschluss eines Wicklungssystems 17 eines Rotors 16 erlauben.

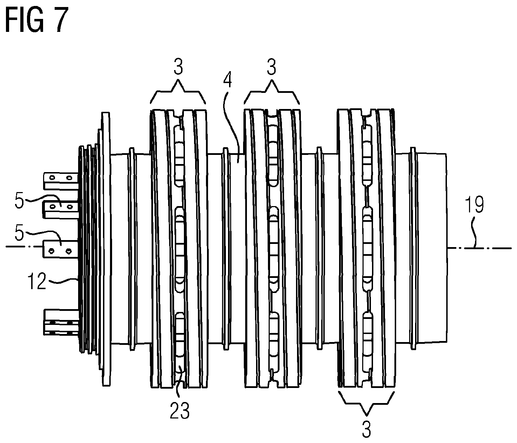

FIG 7 zeigt in einer Queransicht das Schleifringsystem 3 gemäß FIG 6.

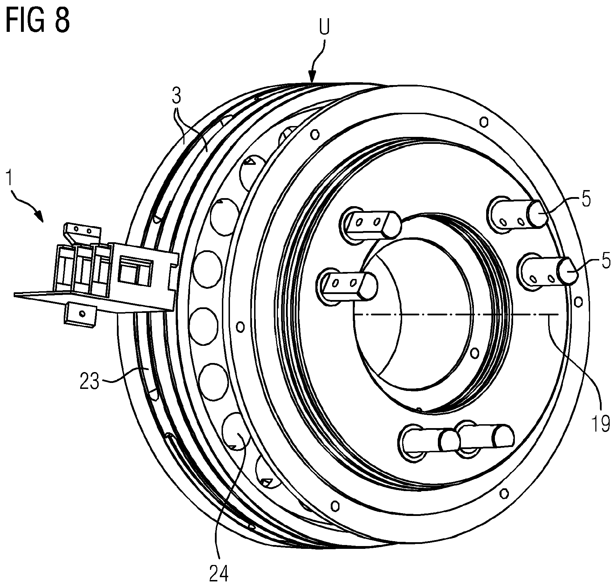

FIG 8 zeigt einen einzelnen Schleifring 3 beispielsweise der Phase U einer Schleifringeinheit mit den vorhin benannten Elementen, wie Kontaktstellen 5, Stützring 12, radialen Kühlöffnungen 23 und axialen Kühlöffnungen 24. Des Weiteren wird dort prinzipiell gezeigt, wie eine Bürstenhalterung 1 am Schleifring 3 angeordnet sein kann.

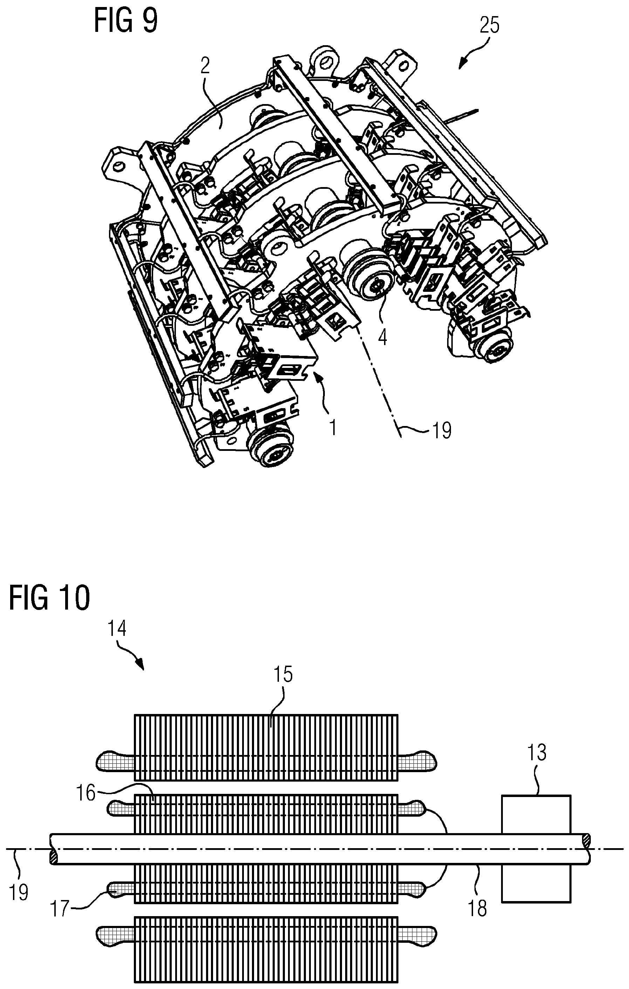

FIG 9 zeigt eine Bürstenbrücke, bei der vier Trägersegmente 2 axial hintereinander angeordnet sind, wobei beispielsweise drei Trägersegmente 2 jeweils einer elektrischen Phase U, V, W zugeordnet sind und ein Trägersegment 2 Bürsten 8 für eine Erdung aufweist.

FIG 10 zeigt in einer prinzipiellen Darstellung die Anordnung eines Schleifringsystems 13 auf einer Welle 18, wobei die Schleifringe 3 ebenso wie der Rotor 16 um die Achse 19 rotiert. Das Schleifringsystem 13 ist dabei an der Stirnseite des Rotors 16 positioniert.

Ein Schleifringsystem 13 weist eine Bürstenbrücke, mit Trägersegmenten 2 und eine Schleifringeinheit mit Schleifringen 3 auf. Ein Trägersegment 2 weist eine oder mehrere Bürstenhalterungen 1 auf, die jeweils einem Schleifring 3 zuzuordnen sind. Jede Bürstenhalterung 1 weist eine oder mehrere Bürstentaschen 7 auf, in denen die Bürsten 8 positioniert sind. Die Bürsten 8 werden durch eine nicht näher dargestellte Vorrichtung auf den Schleifring 3 gedrückt, um einen ordnungsgemäßen Kontakt zu gewährleisten. Des Weiteren werden die Bürsten 8 durch eine dementsprechende Einrichtung bezüglich ihres Verschleißes überwacht. Des Weiteren weist das Schleifringsystem 13 Kontaktstellen 5, Stützring 12, radiale Kühlöffnungen 23 und axiale Kühlöffnungen 24 auf.

Bei einem durchzugsbelüfteten Schleifringsystem 13 wird vorzugsweise kühlere Umgebungsluft durch Lüfter angesaugt und im Schleifringsystem 13 durch ggf. weitere Lüfter und/oder Leitvorrichtungen, insbesondere an die Wärmequellen verteilt. Die nun im Schleifringsystem 13 an den Bürstentaschen 7, den Bürstenhalterungen 1 und/oder den Bürsten 8 erwärmte Luft wird aus dem Schleifringraum in die Umgebung geleitet. Die Luftströmung wird dabei von Saug- und/oder Drucklüftern generiert, die als Axial- oder Radiallüfter ausgeführt sind und am oder im Schleifringraum angeordnet sind.

Filtermatten am Zugang und/oder am Abgang können dabei die verschmutzte Luft filtern.

Bei einem geschlossenen Schleifringsystem 13 wird der in einem Zwischenkühler rückgekühlte Innenkühlkreislauf durch Lüfter und/oder Leitvorrichtungen, insbesondere an die Wärmequellen innerhalb des geschlossenen Gehäuses des Schleifringsystems 13 verteilt. Die nun im Schleifringsystem 13 an den Bürstentaschen 7, den Bürstenhalterungen 1 und/oder den Bürsten 8 erwärmte Luft wird aus dem Schleifringraum, in den nicht näher dargestellten Zwischenkühler geleitet. Diese Luftströmung wird dabei von Saug- und/oder Drucklüftern generiert, die innerhalb des Gehäuses des Schleifringsystems 13 angeordnet sind.

Derartige kompakte Schleifringsysteme 13 eignen sich vor allem für dynamoelektrischen Maschinen 14 mit vergleichsweise hoher Leistung im MW-Bereich. Dabei sind diese Maschinen 14 besonders als Generatoren, insbesondere doppelt gespeiste Asynchronmaschinen von Windkraftanlagen geeignet, da der vorhandene Bauraum in einer Gondel einer Windkraftanlage vergleichsweise knapp bemessen ist, und trotzdem vergleichsweise große Leistungen im Generator übertragen werden sollen.

## Patentansprüche

1. Schleifringsystem (13) einer elektrisch erregten dynamoelektrischen Maschine (14),
wobei das Schleifringsystem (13) ein oder mehrere Trägersegmente (2) aufweist, die jeweils eine oder mehrere Bürstenhalterungen (1) aufweisen, wobei das Schleifringsystem (13) ein Belüftungssystem aufweist,
wobei die Bürstenhalterungen (1) Mittel zur Kühlung von Bürsten (8) in den Bürstenhalterungen (1) vorsehen,
wobei die Bürstenhalterungen (1) oberflächenvergrößernde Strukturen aufweisen, und die Bürstenhalterungen (1) eine oder mehrere Bürstentaschen (7) aufweisen,
wobei innerhalb des Schleifringsystems (13), das geschlossen oder offen ausgeführt ist, Luft derart führbar ist, dass die Bürstenhalterungen (1) und/oder die Bürstentaschen (7) kühlbar sind, wobei Lüfter und/oder Leitvorrichtungen in und/oder an dem Schleifringsystem (13) einen axialen Kühlluftstrom generieren, wobei die Lüfter und/oder Leitvorrichtungen auch einen radialen Kühlluftstrom generieren, **dadurch gekennzeichnet, dass** die Kühlluftströme aufgrund von oberflächenvergrößernden Strukturen, nämlich Rippen oder Noppen, die in radialer Richtung und in Umfangsrichtung der dynamoelektrischen Maschine (14) ausgerichtet sind, an den Bürstentaschen (7) radial und in Umfangsrichtung der dynamoelektrischen Maschine an den Bürstenhalterungen (1) vorbei geführt werden.

2. Schleifringsystem (13) nach Anspruch 1, **dadurch gekennzeichnet, dass** an unterschiedlichen Seiten der Bürstentaschen (7) Ausnehmungen (11) oder die oberflächenvergrößernden Strukturen vorgesehen sind, die in Umfangsrichtung und in radialer Richtung der dynamoelektrischen Maschine (14) ausgerichtet sind.

3. Schleifringsystem (13) nach Anspruch 1 oder Anspruch 2, **dadurch gekennzeichnet, dass** das Schleifringsystem (13) axiale Kühlöffnungen (24) und radiale Kühlöffnungen (23) aufweist.

4. Schleifringsystem (13) nach einem der vorhergehenden Ansprüche, **dadurch gekennzeichnet, dass** bei einem offenen Schleifringsystem (13) die Zu- und/oder Abgänge der Luft mit Filtermatten versehen sind.

5. Schleifringsystem (13) nach einem der vorhergehenden Ansprüche, **dadurch gekennzeichnet, dass** die Oberfläche der Bürstenhalterungen (1) Rippen (9) und/oder Nadeln (10) und/oder Ausnehmungen (11) aufweist, um eine Kühlung der Bürsten (8) und/oder der Bürstenhalterung (1) zu ermöglichen.

6. Dynamoelektrische Maschine, insbesondere Generator einer Windkraftanlage, mit einem Schleifringsystem nach einem der vorhergehenden Ansprüche.

7. Dynamoelektrische Maschine nach Anspruch 6, **dadurch gekennzeichnet, dass** der Generator eine doppelt gespeiste Asynchronmaschine ist.

## Claims

1. Slip ring system (13) of an electrically excited dynamoelectric machine (14),
wherein the slip ring system (13) has one or more carrier segments (2), each of which has one or more brush holders (1), wherein the slip ring system (13) has a ventilation system,
wherein the brush holders (1) provide means for cooling brushes (8) in the brush holders (1),
wherein the brush holders (1) have surface-enlarging structures, and the brush holders (1) have one or more brush pockets (7),
wherein air can be guided within the slip ring system (13), which is designed to be closed or open, in such a way that the brush holders (1) and/or the brush pockets (7) can be cooled, wherein an axial cooling air flow is generated by fans and/or ducting devices in and/or on the slip ring system (13), wherein a radial cooling air flow is also generated by the fans and/or ducting devices, **characterized in that**, owing to surface-enlarging structures, specifically ribs or nubs, which are oriented in the radial direction and in the circumferential direction of the dynamoelectric machine (14), the cooling air flows are, at the brush pockets (7), guided radially and in the circumferential direction of the dynamoelectric machine past the brush holders (1).

2. Slip ring system (13) according to Claim 1, **characterized in that** provision is made on different sides of the brush pockets (7) of cutouts (11) or the surface-enlarging structures oriented in the circumferential direction and in the radial direction of the dynamoelectric machine (14).

3. Slip ring system (13) according to Claim 1 or Claim 2, **characterized in that** the slip ring system (13) has axial cooling openings (24) and radial cooling openings (23).

4. Slip ring system (13) according to one of the preceding claims, **characterized in that** in an open slip ring system (13) the air inlets and/or outlets are provided with filter mats.

5. Slip ring system (13) according to one of the preceding claims, **characterized in that** the surface of the brush holders (1) has ribs (9) and/or needles (10) and/or cutouts (11) to enable cooling of the brushes (8) and/or of the brush holder (1).

6. Dynamoelectric machine, in particular generator of a wind turbine, comprising a slip ring system according to one of the preceding claims.

7. Dynamoelectric machine according to Claim 6, **characterized in that** the generator is a doubly fed asynchronous machine.

## Revendications

1. Système de bague collectrice (13) d'une machine dynamoélectrique (14) à excitation électrique,
le système de bague collectrice (13) comportant un ou plusieurs segments porteurs (2) qui comportent chacun un ou plusieurs porte-balais (1), le système de bague collectrice (13) comportant un système de ventilation,
les porte-balais (1) prévoyant des moyens pour refroidir des balais (8) dans les porte-balais (1),
les porte-balais (1) comportant des structures d'agrandissement de surface et les porte-balais (1) comportant une ou plusieurs poches (7) de balais,
de l'air pouvant être guidé à l'intérieur du système de bague collectrice (13), qui est de conception fermée ou ouverte, de manière à pouvoir refroidir les porte-balais (1) et/ou les poches (7) de balais, des ventilateurs et/ou des dispositifs d'acheminement générant un flux d'air de refroidissement axial dans et/ou sur le système de bague collectrice (13), les ventilateurs et/ou les dispositifs d'acheminement générant également un flux d'air de refroidissement radial, **caractérisé en ce que** les flux d'air de refroidissement sont guidés radialement le long des poches (7) de balais et le long des porte-balais (1) dans le sens circonférentiel de la machine dynamoélectrique en raison de structures d'agrandissement de surface, à savoir de nervures ou de boutons, qui sont orientés dans le sens radial et dans le sens circonférentiel de la machine dynamoélectrique (14).

2. Système de bague collectrice (13) selon la revendication 1, **caractérisé en ce que** sont prévus, sur différents côtés des poches (7) de balais, des évidements (11) ou les structures d'agrandissement de surface, qui sont orientés dans le sens circonférentiel et dans le sens radial de la machine dynamoélectrique (14).

3. Système de bague collectrice (13) selon la revendication 1 ou la revendication 2, **caractérisé en ce que** le système de bague collectrice (13) comporte des ouvertures de refroidissement axiales (24) et des ouvertures de refroidissement radiales (23).

4. Système de bague collectrice (13) selon l'une des revendications précédentes, **caractérisé en ce que**, dans le cas d'un système de bague collectrice (13) ouvert, l'entrée et/ou la sortie de l'air sont pourvues de nattes filtrantes.

5. Système de bague collectrice (13) selon l'une des revendications précédentes, **caractérisé en ce que** la surface des porte-balais (1) comporte des nervures (9) et/ou des aiguilles (10) et/ou des évidements (11) pour permettre un refroidissement des balais (8) et/ou du porte-balais (1).

6. Machine dynamoélectrique, en particulier générateur d'une éolienne, comportant un système de bague collectrice selon l'une des revendications précédentes.

7. Machine dynamoélectrique selon la revendication 6, **caractérisée en ce que** le générateur est une machine asynchrone à double alimentation.
